## Europäisches Patentamt
## European Patent Office
## Office européen des brevets

(11) Publication number: **0 000 994**
**B1**

(12) **EUROPEAN PATENT SPECIFICATION**

(45) Date of publication of patent specification: **21.10.81**

(21) Application number: **78300277.7**

(22) Date of filing: **11.08.78**

(51) Int. Cl.³: **C 08 G 81/02,**
**C 08 F 299/00,**
**C 08 L 51/00,**
**C 08 F 259/04 //C08F210/12**

(54) Process of preparing plasticized compositions of PVC and butyl rubber.

(30) Priority: **18.08.77 US 825758**

(43) Date of publication of application:
**07.03.79 Bulletin 79/5**

(45) Publication of the grant of the European patent:
**21.10.81 Bulletin 81/42**

(84) Designated Contracting States:
**BE DE FR GB NL**

(56) References cited:

**Keine**

(73) Proprietor: **THE FIRESTONE TIRE & RUBBER COMPANY**
**1200 Firestone Parkway**
**Akron, Ohio 44317 (US)**

(72) Inventor: **Trivedi, Prakash Druman**
**2711 Shoreline Drive**
**Akron Ohio (US)**
Inventor: **Ambrose, Richard Joseph**
**3202 Bancroft Road**
**Akron Ohio (US)**

(74) Representative: **Baillie, Iain Cameron et al,**
**c/o Ladas, Parry, von Gehr. Goldsmith & Deschamps Blumenstrasse 48**
**D-8000 München 2 (DE)**

Courier Press, Leamington Spa, England.

### Process of preparing plasticized compositions of PVC and butyl rubber

The present invention relates to a novel process for the compatibilization of polyvinyl chloride (PVC) and butyl rubber (IIR) to prepare useful plasticized PVC compositions. In order to impart useful, flexible properties to PVC it is necessary to incorporate a plasticizer. Butyl rubber, a random copolymer of isobutylene and a small percent isoprene can plasticize PVC, however, it has been difficult to add and maintain a relatively high content of butyl rubber in PVC either by blending or grafting.

PVC and butyl rubber can be made compatible to some extent by the preparation of a graft product PVC-$g$-IIR. It is preferably known that polyvinyl chloride, in the presence of certain alkylaluminum compounds, will initiate polymerization of isobutylene (IB) to produce PVC-$g$-PIB copolymers. One such cationic grafting process is disclosed in U.S. Pat. Nos. 3,904,708 and 3,933,942, wherein a halogenated polymer serves as a backbone for the graft of cationically polymerizable monomers such as isobutylene, styrene, isoprene, butadiene and the like.

Further work with cationic graft polymerization has been reported by J. P. Kennedy and D. L. Davidson, *J. Polym. Sci. Chem. Ed.* 13, 153 (1976), wherein isobutylene and isoprene were copolymerized in the presence of a PVC backbone and an alkylaluminum halide compound to form PVC-$g$-IIR copolymers. The product obtained was generally a mixture of PVC-$g$-IIR and ungrafted PVC and butyl rubber. The highest amount of butyl rubber in the graft product was reported as 39.1% by weight. The grafting efficiency was 14.6%, indicating a large formation of ungrafted butyl rubber. After the copolymerization of the isobutylene and isoprene the reaction was terminated and the ungrafted butyl rubber was extracted. Tests were subsequently undertaken with solvent cast films of the graft copolymer uncured and cured with sulfur monochloride ($S_2Cl_2$). The uncured product failed at 160 kg/cm² while the cured product showed a reduction in stress properties, failing at about 130 kg/cm²·

Thus, while the preparation of PVC-$g$-IIR has been described elsewhere, the product used as such has not been readily millable nor moldable, nor strong and homogeneous. In terms of processing, the extra step of extraction of ungrafted butyl rubber had been necessary and the ungrafted butyl rubber had merely become waste. Though the extracted product PVC-$g$-IIR possesses acceptable properties in films (solvent cast), it is still not readily millable or moldable under commonly utilized PVC processing conditions. Thus, the prior art has yielded a graft product which could not be utilized commercially except in a very limited sense, *e.g.*, solvent cast films.

It is therefore an object of the present invention to provide a novel process for the compatibilization of PVC and butyl rubber wherein butyl rubber branches are first grafted from a PVC backbone and then the graft copolymer and ungrafted butyl rubber are cured together.

It is another object of the present invention to provide a novel process for the compatibilization of PVC and butyl rubber wherein a much higher amount of butyl rubber is incorporated with the PVC, as a plasticizer, than has heretofore been possible.

It is yet another object of the present invention to provide a novel process for the compatibilization of PVC and butyl rubber wherein excess, ungrafted butyl rubber is not extracted from the total graft product thereby eliminating waste

It is still another object of the present invention to provide a useful composition of PVC and butyl rubber which is strong, homogeneous, millable and moldable upon curing.

These and other objects of the present invention shall become apparent from the specification and claims which follow.

In accordance with the invention there is provided a process for preparing a plasticized composition of PVC and butyl rubber, which comprises preparing the graft copolymer, PVC-$g$-IIR from a PVC backbone and a quantity of isobutylene and isoprene in the presence of a catalyst and a swelling agent and characterized by dissolving said graft copolymer, ungrafted butyl rubber and any ungrafted PVC in a solvent; and thereafter crosslinking said graft copolymer and ungrafted butyl rubber for a period of time of up to 60 hours to form a desired product having a butyl rubber content of from 5.0 to 95 per cent by weight.

The PVC polymer may be suspended in a suitable solvent, a monomeric charge of isobutylene and isoprene is added, the mixture is cooled to approximately −40°C. and a catalytic amount of an alkylaluminum halide solution is added to initiate copolymerization of the isobutylene and isoprene from the PVC backbone. The polymerization reaction is terminated after a suitable time following which the graft copolymer and remaining ungrafted PVC and butyl rubber are dissolved in tetrahydrofuran (THF) and treated with $S_2Cl_2$ and allowed to cure for period of time of from 20 minutes to about 60 hours. The cured product may be readily milled and molded by mixing it with a conventional processing aids and stabilizers. In this process substantially all of the butyl rubber formed is incorporated with the PVC being either grafted therefrom or crosslinked to the graft copolymer.

The polymerization reaction conditions under which the graft copolymer, PVC-$g$-IIR may be prepared include polymerization times of from 5 minutes to 120 minutes with 20—90 minutes being preferred and a temperature of from −70°C to 0°C., with −55°C to −40°C. being preferred.

Selection of the polyvinyl chloride polymer is not necessarily critical. The number-average molecular weight of the polymer may range from 5,000 to 200,000 with 30,000—130,000 g/mole being preferred. Similarly, the graft butyl rubber branches may be any conventional unsaturated random copolymer of isobutylene and isoprene such as disclosed in U.S. Pat. Nos. 2,727,874 and 3,694,377, with number-average molecular weights of the graft, per branch, ranging from 15,000 to 1,000,000 g/mole. In terms of weight %, it is believed that the amount of polymer backbone and the butyl rubber branches in the product may each range from 5 to 95 in any combination totalling 100. For plasticized PVC, the preferred combination is from 25 to 65 percent by weight of butyl rubber in the total product.

Perhaps somewhat more significant than selection of the components comprising the graft branches is the percent by weight ratio of each to the other in the overall product. While in prior art techniques it has not been possible to incorporate unlimited amounts of butyl rubber by grafting, the process of the present invention permits essentially all of the butyl rubber formed to be incorporated with the PVC. Therefore, variations in the amount of butyl rubber, ranging from 5 wt.% to 95 wt.% are possible, and will vary the properties of the resultant graft product from hard plastic-like to soft elastomeric, respectively. Depending upon selected composition, the product may be used for flexible tubing, packaging films, pipes and protective coatings. However, raising the butyl rubber content to 54% provides very similar hardness of the PVC as when it has been plasticized with about 30% dioctyl phthalate.

The catalyst system used in the present invention comprises a compound of the type $Al(M)_2R$, where M is a branched or straight chain alkyl group having from 1 to 12 carbons and R is selected from M, hydrogen or halogen. Although the compound, i.e., alkylaluminum, is referred to as the catalyst it is to be understood that the compound works with the polymeric halide as a coinitiator system which will enable the cationic polymerization of the olefins to commence and proceed from the polymeric halide. Representative compounds which may be employed are listed in U.S. Pat. No. 3,694,377. A particularly useful compound is diethylaluminum chloride, $Et_2AlCl$.

In order to conduct the grafting efficiently, suitable solvents such as methylene chloride, ethylene, chloride, 1,2-dichlorobenzene or mixtures thereof may be employed as a swelling agent.

In a typical laboratory synthesis of the graft copolymer, the procedures employed were as follows:

A commercial PVC sample (FPC 9326 or FPC 9300, Firestone Plastic Co.) was utilized for grafting. Isobutylene (Union Carbide Corporation) was dried by passage over molecular sieves and barium oxide. Isoprene (Matheson, Coleman & Bell Co.), diethylaluminum chloride (Ethyl Corp.) and methylene chloride (Matheson, Coleman & Bell Co.) were each freshly distilled prior to use. All reactions and manipulations were conducted in a stainless steel safety enclosure under dry nitrogen atmosphere (moisture content less than 50 ppm). All parts are in terms of percent by weight unless otherwise specified.

300 Mls. isobutylene and 40 mls. isoprene were charged to a suspension comprising 90.0 gms. of PVC in 100 mls. methylene chloride at —40°C., to which was added 20 mls. of diethylaluminum chloride solution (1.5 M in n-hexane) twice at intervals of 20 minutes with continuous stirring. The reaction was terminated with methanol after 60 minutes and the product which was subsequently precipitated in excess methanol and dried, weighed 110.2 gms indicating a content of 18.3% butyl rubber. The conversion, based upon the amount of isobutylene, was 8.5%. The product from this stage of the process should be understood to consist of the graft copolymer as well as any ungrafted butyl rubber and PVC.

Six solutions were prepared for curing containing 5% wt./vol. of the product in THF. To this solution was added $S_2Cl_2$ to give a 1% vol./vol. solution of the latter in THF. The subsequent cross-linking reaction was allowed to proceed for various time periods ranging from about 20 minutes to 60 hours. The reaction was terminated with methanol and the product thereof was subsequently dried. Next, equal parts (1 part per 100 parts of the product) of calcium stearate, as a processing aid, and barium-cadmium laurate, as a stabilizer were added to the product. Although calcium stearate and barium-cadmium laurate were employed, it is to be understood that any conventional processing aid and stabilizer for PVC may be selected.

While the uncured product could not be milled, was very sticky and became nonhomogeneous, as cure time increased, the product became less sticky and stronger. Compression molding of the cured product routinely carried out at 148—163°C. for 3—10 minutes was also quite feasible but not for the uncured product. Generally, an increase in the tensile strength of the product was observed to be directly related to an increase in the cure time as indicated in Table I for a graft product containing 18.3% butyl rubber. Although reduction in the cure time is possible without much sacrifice in tensile strength by employing peroxides with the $S_2Cl_2$, it has been found that the best results were obtained by allowing the product to cure slowly.

## TABLE I
### Tensile Properties of PVC-*g*-IIR as a Function of Cure Time

| Cure Time (hrs.) | 3.5 | 5.0 | 7.0 | 24.0 | 31.0 | 55.0 |
|---|---|---|---|---|---|---|
| Tensile Strength ($Kg/cm^2$) | 17.58 | 23.20 | 35.15 | 84.37 | 105.46 | 210.90 |

In Table II, six graft products are presented wherein the weight percent of butyl rubber in the products ranges from 15—65%. Tensile strengths, ultimate elongation and hardness properties have been determined and are included. The curing was carried out as explained hereinabove, i.e., utilizing a 5% wt./vol. of the product in THF to which $S_2Cl_2$ is added to give a 1% vol./vol. solution of the latter in THF.

## TABLE II
### Tensile Properties of PVC*g*-IIR as a Function of % IIR Present

| Sample No. | %IIR | Ultimate Elongation % | Tensile Strength[a] | | Hardness |
|---|---|---|---|---|---|
| | | | MPa | $Kg/cm^2$ | |
| 1 | 15 | 40 | 48.8 | 497 | ——— |
| | | 115 | 17.9 | 183[b] | |
| 2 | 18 | 23 | 20.7 | 211 | 40 (R) |
| | | 125 | 6.6 | 67[b] | |
| 3 | 26 | 17 | 26.2 | 267 | 72 (R) |
| | | 66 | 13.0 | 132[b] | |
| 4 | 46 | 70 | 31.0 | 316 | 10 (R) |
| | | 230 | 6.0 | 61[b] | |
| 5 | 55 | 95 | 21.4 | 218 | 54 (D) |
| | | 150 | 5.5 | 56[b] | |
| 6 | 65 | 90 | 5.5 | 246 | 56(D) |
| | | 140 | 7.6 | 77[b] | |

(a) Cure Time 55 Hrs.
(b) Tests carried out at 100°C.

Thus, it can be seen that the disclosed invention carries out the objects of the invention set forth above. By crosslinking the ungrafted butyl rubber branches to the graft copolymer prepared not only is a costly step of extraction eliminated but also, there is no waste of butyl rubber. Furthermore, much greater amounts of butyl rubber may be incorporated with the PVC than has been heretofore possible by grafting techniques alone. As will be apparent to those skilled in the art, properties of the PVC and butyl rubber product can be varied by selection of the resultant molecular weight and percent composition of the product.

### Claims

1. A process for preparing a plasticized composition of PVC and butyl rubber, which comprises preparing the graft copolymer, PVC-*g*-IIR from a PVC backbone and a quantity of isobutylene and isoprene in the presence of a catalyst and a swelling agent, and characterized by dissolving said graft copolymer, ungrafted butyl rubber and any ungrafted PVC in a solvent; and thereafter crosslinking said graft copolymer and ungrafted butyl rubber for a period of time of up to 60 hours to form a desired product having a butyl rubber content of from 5.0 to 95 per cent by weight.

2. A process according to claim 1, wherein the graft copolymer is prepared by charging a reaction vessel with a polyvinyl chloride and the swelling agent; charging a quantity of isobutylene and isoprene to the reaction vessel at a temperature of from —70°C. to 0°C.; adding a catalytic amount of an alkylaluminium compound with continuous mixing whereby said polyvinyl chloride and said alkylaluminum compound initiate copolymerization of said isobutylene and said isoprene; and reacting the contents of the reaction vessel for a period of time of from 5 minutes to 120 minutes to form a graft copolymer of PVC and butyl rubber.

3. A process according to claim 2, wherein the alkylaluminum compound is diethylaluminum chloride.

4. A process according to any one of the preceding claims, wherein $S_2Cl_2$ is added to the solution of graft copolymer and ungrafted PVC and butyl rubber in the crosslinking step.

5. A process according to any one of the preceding claims, wherein the solvent is THF.

6. A process according to any one of the preceding claims, wherein the swelling agent is methylene chloride, ethylene chloride, 1,2-dichlorobenzene or mixtures therof.

## Revendications

1. Procédé de préparation d'une composition plastifiée de chlorure de polyvinyle (PVC) et de caoutchouc butyle (IIR), qui consiste à préparer le copolymère greffé PVC-$g$-IIR à partir d'un squelette de PVC et d'une quantité d'isobutylène et d'isoprène en présence d'un catalyseur et d'un agent de gonflement, caractérisé en ce qu'on dissout ledit copolymère greffé, le caoutchouc butyle non greffé et tout PVC non greffé dans un solvant; puis on réticule ledit copolymère greffé et le caoutchouc butyle non greffé pendant un temps allant jusqu'à 60 heures pour former un produit désiré ayant une teneur en caoutchouc butyle de 5,0 à 95% en poids.

2. Procédé selon la revendication 1, où on prépare le copolymère greffé en chargeant dans un récipient de réaction le chlorure de polyvinyle et l'agent de gonflement; en chargeant une quantité d'isobutylène et d'isoprène dans le récipient de réaction à une température de −70°C à 0°C; en ajoutant une quantité catalytique d'un dérivé d'alkylaluminium en mélangeant continuellement, grâce à quoi ledit chlorure de polyvinyle et ledit dérivé d'alkylaluminium amorcent la copolymérisation desdits isobutylène et isoprène; et en faisant réagir le contenu du récipient de réaction pendant un temps allant de 5 à 120 minutes pour former un copolymère greffé de PVC et de caoutchouc butyle.

3. Procédé selon la revendication 2, où le dérivé d'alkylaluminium est le chlorure de diéthyl-aluminium.

4. Procédé selon l'une quelconque des revendications 1, 2 et 3, où on ajoute $S_2Cl_2$ à la solution du copolymère greffé et du PVC et du caoutchouc butyle non greffés dans l'étape de réticulation.

5. Procédé selon l'une quelconque des revendications précédentes, où le solvant est THF.

6. Procédé selon l'une quelconque des revendications précédentes, où l'agent de gonflement est le chlorure de méthylène, le chlorure d'éthylène, le 1,2-dichlorobenzène ou leurs mélanges.

## Patentansprüche

1. Verfahren zum Erzeugen von weichgemachten Massen aus PVC und Butylkautschuk, in dem aus einer PVC-Hauptkette und einer Menge Isobutylene und Isopren in Anwesenheit eines Katalysators und eines Quellmittels das Pfropfcopolymer PVC-$g$-IIR erzeugt wird, dadurch gekennzeichnet, dass das Pfropfkopolymer, nichtgepfropfter Butylkautschuk und etwa noch vorhandenes, nichtgepropftes PVC in einem Lösungsmittel gelöst und danach während eines Zeitraums von bis zu 60 Stunden das Pfropfcopolymer und der nichtgepropfte Butylkautschuk vernetzt werden, so dass ein erwünschtes Produkt mit einem Butylkautschukgehalt von 5,0 bis 95 Gew.% erhalten wird.

2. Verfahren nach Anstpruch 1, dadurch gekennzeichnet, dass zum Erzeugen Pfropfcopolymers ein Reaktionsgefäß mit Polyvinylchlorid und dem Quellmittel beschickt wird, dass eine Menge Isobutylen und Isopren bei einer Temperatur von −70°C bis 0°C in das Reaktionsgefäß eingebracht wird, dass eine katalytisch wirksame Menge einer Alkylaluminiumverbindung unter kontinuierlichem Mischen zugesetzt wird, so dass das Polyvinylchlorid und die Alkylaluminiumverbindung die Copolymerisation des Isobutylens und des Isoprens einleiten, und dass der Inhalt des Reaktionsgefäßes während eines Zeitraums von 5 bis 120 min zur Reaktion gebracht wird, wodurch ein Pfropfcopolymer von PVC und Butylkautschuk gebildet wird.

3. Verfahren nach Anspruch 2, dadurch gekennzeichnet das die Alkylaluminiumverbindung Diäthylaluminiumchlorid ist.

4. Verfahren nach einem der vorhergehenden Ansprüche, dadurch gekennzeichnet, dass während des Vernetzungsschritts $S_2Cl_2$ zu der Lösung des Pfropfkopolymers und des nichtgepfropften PVCs und Butylkautschuks zugesetzt wird.

5. Verfahren nach einem der vorhergehenden Ansprüche, dadurch gekennzeichnet, dass das Lösungsmittel THF ist.

6. Verfahren nach einem der vorhergehenden Ansprüche, dadurch gekennzeichnet, dass das Quellmittel Methylenchlorid, Äthylenchlorid, 1,2-Dichlorbenzol oder ein Gemisch derselben ist.